# EUROPEAN PATENT APPLICATION

(11) **EP 4 847 478 A1**
(43) Date of publication of application: **02.12.2026**
(21) Application number: 26167613.4
(22) Date of filing: 25.03.2026
(51) Int. Cl.: C04B 41/53, C04B 41/00, C04B 41/50, C04B 41/91, C23G 1/02, C23G 1/10, F01D 5/00, F01D 25/00, C04B 111/00

(54) **METHODS AND COMPOSITIONS FOR REMOVING ADHERED PARTICULATE FROM A SUBSTRATE**

(30) Priority: 29.05.2025 US 202519222330
(71) Applicant: General Electric Company, Cincinnati, Ohio 45215 (US)
(72) Inventor: PROCHASKA, Stephanie Orfali, Niskayuna, 12309-1027 (US); VOZAR, Andrea Lena, Niskayuna, 12309-1027 (US); KOOL, Lawrence Bernard, Niskayuna, 12309-1027 (US)
(74) Representative: Openshaw & Co.

(57) **Abstract**

Cleaning solutions and methods are provided herein useful for removing adhered particulate matter, such as calcium magnesium aluminosilicate from a substrate. The substrate may comprise at least one of a ceramic matrix composite or an environmental barrier coating. In some approaches, a cleaning solution comprises an aqueous solution of an acid fluoride or a fluoride salt. In some approaches, a cleaning method may include contacting the substrate with a cleaning solution comprising an aqueous solution of an acid fluoride or a fluoride salt.

## Description

### TECHNICAL FIELD

These teachings relate generally to methods and compositions for cleaning a substrate and, in particular, to methods and compositions for removing adhered particulate from a substrate.

### BACKGROUND

Components of gas turbine engines may be susceptible to contamination by particulate, for example, aluminosilicate materials such as calcium magnesium aluminosilicate (CMAS). CMAS may originate as environmental debris, such sand or volcanic ash, that is ingested into a gas turbine engine during flight. CMAS may accumulate and form deposits on components of the gas turbine engine. At high engine operating temperatures, CMAS can melt and penetrate the coatings of components, resulting in premature coating wear and reduced coating life. It is also contemplated that CMAS penetration may result in coatings cracking. Thus, methods of removing CMAS from gas turbine engine components may be desirable.

### BRIEF DESCRIPTION OF DRAWINGS

Various needs are at least partially met through the provision of the methods and compositions for removing adhered particulate matter from a substrate are described in the following detailed description, particularly when studied in conjunction with the drawings. A full and enabling disclosure of the aspects of the present description, including the best mode thereof, directed to one of ordinary skill in the art, is set forth in the specification, which refers to the appended figures, in which:
FIG. 1 is a flow diagram of a method for removing adhered particulate matter from a substrate;
FIG. 2 is a table including the composition of an experimental coupon, namely Coupon A referred to in Example 1;
FIG. 3 is a graph illustrating the mass of a substrate exposed to an exemplary cleaning solution as a function of exposure time;
FIG. 4 is a table including the composition of experimental coupons, namely Coupons B and C referred to in Example 2;
FIG. 5A, 5B, and 5C are images of a coupon comprising a ceramic matrix composite, referred to in Example 2;
FIG. 6 is a table including the composition of experimental coupons, namely Coupons D and E referred to in Example 3;
FIGS. 7A and 7B are images of coupon comprising a ceramic matrix composite, referred to in Example 3;
FIG. 8A is a schematic diagram of the coupon of Example 9;
FIG. 8B is a schematic diagram of the coupon of Example 9 after exposure to a cleaning solution;
FIG. 9A is a schematic diagram of the coupon of Example 10;
FIG. 9B is a schematic diagram of the coupon of Example 10 after exposure to a cleaning solution;
FIG. 10 is a schematic diagram of the coupon of Example 11;
FIG. 11 is a schematic diagram of the coupon of Example 12; and

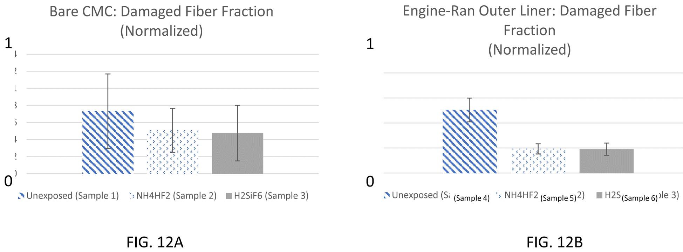

FIGS. 12A and 12B are charts of quantitative microscopy data measuring damaged fiber fraction, as referred to in Example 13.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present teachings. Also, common but well-understood elements that are useful or necessary in a commercially feasible embodiment are often not depicted in order to facilitate a less obstructed view of these various embodiments of the present teachings. Certain actions and/or steps may be described or depicted in a particular order of occurrence while those skilled in the art will understand that such specificity with respect to sequence is not actually required.

### DETAILED DESCRIPTION

Described herein are cleaning compositions and methods for removing adhered particulate from a substrate. In one example, the substrate is a ceramic matrix composite (CMC). In another example, the substrate is an environmental barrier coating (EBC) which may be disposed on any suitable substrate and, in some embodiments, is disposed on a ceramic matrix composite (CMC) substrate. In some embodiments, a method for removing adhered particulate matter from a substrate comprises contacting the adhered particulate matter with an aqueous composition comprising an aqueous solution of a fluoride-containing compound. The fluoride-containing compound may be an acid fluoride or a fluoride salt.

Adhered particulate may include any inorganic environmental debris or particulate. Adhered particulate may include any melted, un-melted, or partially melted particulate present on a substrate. Adhered particulate matter may comprise oxides of calcium, magnesium, aluminum, silicon, and mixtures thereof. In some examples, the adhered particulate matter may be an aluminosilicate material such as calcium magnesium aluminosilicate (CMAS) which may comprise calcium, magnesium, and aluminosilicate. CMAS may include other elements in small amounts, for example, less than about 10% by weight of the total weight of the mixture. Other elements present in the CMAS may be nickel, iron, titanium, chromium, barium, alkali metals, and compounds of such elements. In one non-limiting example, the CMAS may comprise about 5 weight percent (wt.%) to about 35 wt.% calcium oxide; about 2 wt.% to about 35 wt.% magnesium oxide; about 5 wt.% to about 15 wt.% aluminum oxide; and about 5 wt.% to about 55 wt.% silicon oxide.

The adhered particulate matter may be introduced to a substrate from the environment. In one example, particulate may be introduced to a substrate, such as a component of a gas turbine engine (e.g., an aircraft engine), via ingestion into the engine. During operation, the engine may inhale dust, aerosolized particulates, particulate matter, mineralogical dusts, or similar. Particulate or other contaminants that contribute to the accumulation of adhered particulate matter on a substrate may be in a variety of forms such as oxides, phosphates, carbonates, salts, and mixtures thereof. The composition of the adhered particulate matter may depend on the environment in which the substrate is employed. For example, when the substrate is a gas turbine engine component, sources of the adhered particulate matter may include sand, dirt, volcanic ash, fly ash, cement, runway dust, substrate impurities, fuel and air sources, oxidation products from engine components, etc.

As discussed above, the substrates cleaned using the cleaning solutions and methods described herein may be either ceramic matrix composites (CMCs) or environmental barrier coatings (e.g., EBCs disposed on a CMC). In some examples, the CMC may be a silicon carbide (SiC) material. CMCs may include, but are not limited to, CMCs with a silicon carbide matrix and silicon carbide fiber (when made by silicon melt infiltration, this matrix will contain residual free silicon); silicon carbide/silicon matrix mixture and silicon carbide fiber; silicon-carbide-fiber-reinforced silicon carbide (SiC/SiC); oxide-oxide CMCs may be comprised of a matrix and reinforcing fibers comprising oxide-based materials such as silicon dioxide (SiO2 ), aluminosilicates, and mixtures thereof; carbon-fiber-reinforced carbon (C/C); and carbon-fiber-reinforced silicon carbide (C/SiC).

Environmental barrier coatings (EBCs) can be comprised of a single or multiple layers of materials. Each layer may be composed of a single or multiple chemical compositions. EBC materials include, but are not limited to, rare earth (RE)-disilicates; rare earth (RE)-monosilicates; alkaline earth (AE) aluminosilicates (AEAl₂Si₂O₈); aluminum silicate or mullite (Al₆Si₂O₁₃); zirconium silicate (ZrSiO₄), hafnium silicate (HfSiO₄); compounds having the formula MₓHf_{y}O_{z}; compounds having the formula (MₓSi_{y}); silicon nitride (Si₃N₄); silicon carbide (SiC); ceramics based on the elements silicon, aluminum, oxygen, and nitrogen (SiAlON); compounds having the formula (SiₓC_{y}N_{z}O); oxide composites; and non-oxide composites. Rare earth elements include cerium (Ce), dysprosium (Dy), erbium (Er), europium (Eu), gadolinium (Gd), holmium (Ho), lanthanum (La), lutetium (Lu), neodymium (Nd), praseodymium (Pr), promethium (Pm), samarium (Sm), scandium (Sc), terbium (Tb), thulium (Tm), ytterbium (Yb), and yttrium (Y). Alkaline earth elements include strontium (Sr), barium (Ba), and radium (Ra). An example of an alkaline earth aluminosilicate is Ba_{0.75}Sr_{0.25}Al₂Si₂O₈ (BSAS). In the above formulas M is a rare earth element, hafnium (Hf), titanium (Ti), or tantalum (Ta). In some examples, the EBCs referred to herein do not include zirconia based ceramic coatings.

Traditional approaches for removing CMAS from components in a gas turbine engine made from a ceramic matrix composite typically involve mechanical removal. Mechanical removal may include, for example, water jet cleaning, abrasive material blasting, or ice blasting. Mechanical removal, however, may be damaging to the underlying ceramic matrix composite or to environmental barrier coatings disposed on the ceramic matrix composite. With such traditional mechanical approaches, any environmental barrier coating present on the ceramic matrix composite is often removed along with the deposited CMAS.

Advantageously, the cleaning compositions and methods described herein may be used to chemically remove or strip deposited CMAS from a ceramic matrix composite substrate while also preserving the environmental barrier coatings present on the ceramic matrix composite. By preserving the environmental barrier coatings, the approaches described herein may increase on-wing time for an aircraft and reduce the service interval for recoating the component. Further, the cleaning compositions and methods described herein may selectively remove CMAS over ceramic matrix composite and, as such, may preserve the integrity of the underlying ceramic matrix composite substrate. For example, the underlying ceramic matrix composite substrate or environmental barrier coating may remain functionally intact after treatment.

Further, traditional approaches for removing CMAS from coatings that involve chemical approaches may remove both the CMAS and the underlying coating. By contrast, the approaches described herein target removal of the CMAS without compromising the microstructure or functionality of the underlying environmental barrier coating.

The compositions and methods described herein may be effective at removing CMAS from a substrate such as a component of a gas turbine engine, a turbo jet engine, an electric jet engine, or hybrid approaches.

The cleaning compositions and methods provided herein may be used to clean a variety of substrates, including a substrate with a coating such as an environmental barrier coating, a bare substrate without a coating, or a component or portion thereof. When the substrate is a material such as a CMC with a coating, after the substrate is cleaned, it may be possible to perform a coating cycle to partially recover the coating without going through full coating removal and repair. For example, once CMAS is removed from a coating such as an EBC, the EBC may be put through an abbreviated coating cycle. CMAS may damage the underlying coating so, once CMAS is removed, it may be possible to implement repair strategies for the coating which may include an abbreviated coating cycle to thicken the coating or, possibly, localized coating application to areas of the coating damaged due to CMAS infiltration. Thus, a lower cost coating cycle may be possible.

### Compositions

The cleaning composition is an aqueous solution of a fluoride-containing compound. The cleaning composition may be referred to herein as a cleaning solution. In some approaches, the fluoride-containing compound is at least one of an acid fluoride or precursors to the acid fluoride. In other approaches, the fluoride-containing compound is a fluoride salt.

Suitable acid fluorides may include any acid fluoride in which the fluoride ion will deprotonate and become reactive. Precursors to the acid fluoride may include any compound or group of compounds that can be combined to form the acid fluoride or its dianion or which can be transformed into the acid fluoride or its dianion under reactive conditions, such as, the action of heat, agitation, catalysts, and the like. By some approaches, the acid fluoride is water soluble.

In some examples, suitable acid fluorides may include, but are not limited to, acid fluorides having the formula HₓAF₆, where A is selected from the group consisting of Si, Ge, Ti, Al, and Ga and where x is a quantity from 1 to 6.

In some examples, the acid fluoride includes at least one of fluorosilicic acid (H₂SiF₆), fluorozirconic acid (H₂ZrF₆), fluorosulfonic acid (HSO₃F), or fluoroacetic acid (CH₂FCO₂H). In some examples, the acid fluoride is selected from the group consisting of fluorosilicic acid (H₂SiF₆), fluorozirconic acid (H₂ZrF₆), fluorosulfonic acid (HSO₃f), fluoroacetic acid (CH₂FCO₂H), and combinations thereof. Such compounds may result in a low concentration of fluoride ions when dissolved in solutions. In yet other examples, the acid fluoride includes at least one of fluorozirconic acid (H₂ZrF₆), or fluoroacetic acid (CH₂FCO₂H). In yet other examples, the acid fluoride may be selected from the group consisting of fluorozirconic acid (H₂ZrF₆), fluoroacetic acid (CH₂FCO₂H), and combinations thereof. Such compounds may result in a low concentration of fluoride ions when dissolved in solutions.

The acid fluoride may be present in the cleaning composition in an amount within the range of about 10 wt.% to about 50 wt.% acid fluoride, based on a total weight of the cleaning composition. In some approaches, the acid fluoride may be present in an amount within the range of about 10 wt.% to about 30 wt.%, about 15 wt.% to about 25 wt.%, or about 20 wt.% to about 30 wt.% acid fluoride, based on a total weight of the cleaning composition.

By some approaches, the acid fluoride may be present in the cleaning composition in an amount within the range of about 0.05 M to about 5.0 M, about 0.5 M and about 3.0 M, about 1.0 M and about 3.0 M, or about 1.0 M and about 2.0 M, where M is molarity in moles per liter (mol/L).

The fluoride salt may be any metal salt, inorganic salt, or organic salt in which the fluoride ion is ionically bound. By some approaches, the fluoride salt is water soluble. In some examples, the fluoride salt has a solubility in water of at least about 1 g/L at room temperature. In some examples, the fluoride salt may have a solubility in water ranging from about 40 g/L to about 130 g/L at room temperature. The fluoride-containing compound may be a fluoride salt that is a salt of fluoride and a Group IA element (e.g., alkali metal) or a Group IIA element (e.g., alkaline earth metal). Suitable Group IA elements include hydrogen (H), lithium (Li), sodium (Na), potassium (K), rubidium (Rb), cesium (Cs), or francium (Fr). Suitable Group IIA elements include beryllium (Be), magnesium (Mg), calcium (Ca), strontium (Sr), barium (Ba), or radium (Ra).

In some examples, the fluoride salt includes at least one of ammonium bifluoride (NH₄HF₂), lithium fluoride (LiF), sodium fluoride (NaF), potassium fluoride (KF), magnesium fluoride (MgF₂), calcium fluoride (CaF₂), or barium fluoride (BaF₂). In some examples, the fluoride salt is selected from the group consisting of ammonium bifluoride (NH₄HF₂), lithium fluoride (LiF), sodium fluoride (NaF), potassium fluoride (KF), magnesium fluoride (MgF₂), calcium fluoride (CaF₂), barium fluoride (BaF₂), or combinations thereof. Such compounds may result in a low concentration of fluoride ions when dissolved in solutions. In other examples, the fluoride salt includes at least one of lithium fluoride (LiF), magnesium fluoride (MgF₂), calcium fluoride (CaF₂), or barium fluoride (BaF₂). In other examples, the fluoride salt is selected from the group consisting of lithium fluoride (LiF), magnesium fluoride (MgF₂), calcium fluoride (CaF₂), barium fluoride (BaF₂), or combinations thereof. Such compounds may result in a low concentration of fluoride ions when dissolved in solutions.

The fluoride salt may be present in an amount within the range of about 0.5 wt.% to about 50 wt.% fluoride salt, based on a total weight of the cleaning composition. In some approaches, the fluoride salt may be present in an amount within the range of about 0.5 wt.% to about 30 wt.%, about 0.5 wt.% to about 20 wt.%, about 1 wt. % to about 15 wt. %, or about 1 wt.% to about 10 wt.% fluoride salt, based on a total weight of the cleaning composition.

By some approaches, the fluoride salt may be present in the cleaning composition in an amount within the range of about 0.01 M to about 10.0 M, about 2.0 M and about 6.0 M, about 0.5 M and about 6.0 M, about 0.2 M and about 5.3 M, about 0.2 M and about 3.5 M, about 0.2 M and about 2.6 M, or about 0.2 M and about 1.8 M, where M is molarity in moles per liter (mol/L).

The cleaning composition may further include a mineral acid. Suitable mineral acids may include hydrochloric acid, sulfuric acid, phosphoric acid, boric acid, hydrobromic acid, perchloric aqua regia, xenic acid, and nitric acid. The mineral acids may help to acidify the fluoride salts.

The mineral acid may be present in the cleaning composition in an amount within the range of about 0.00001 M to about 10 M, where M is molarity in moles per liter (mol/L).

The cleaning composition may have an acid pH that is less than 7.0.

The cleaning composition may also include other additives. Additives may include inhibitors, dispersants, surfactants, chelating agents, wetting agents, deflocculants, stabilizers, anti-settling agents, and anti-foam agents.

The cleaning compositions described herein may be aqueous solutions that may be aqueous liquids or, in some aspects, may be aqueous gels that can be applied to the substrate.

### Methods

The methods described herein may use one or more of the cleaning compositions (e.g., cleaning solutions) described herein. In particular, the methods may use the cleaning compositions described herein to remove adhered particulate matter from a substrate. The substrate may comprise at least one of a ceramic matrix composite or an environmental barrier coating. The adhered particulate matter may include a CMAS material that has been deposited or accumulated on the substrate.

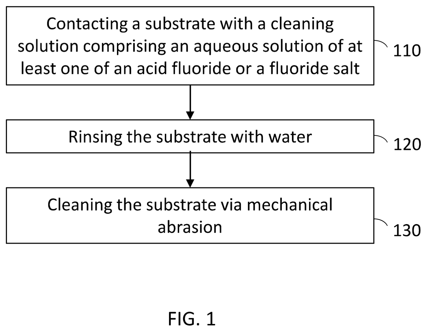

An exemplary method of removing adhered particulate matter from a substrate is illustrated in FIG. 1. At block 110, the method includes contacting the adhered particulate matter with a cleaning solution comprising an aqueous solution of at least one of acid fluoride or a fluoride salt. In some examples, the substrate is a ceramic matrix composite. In other examples, the substrate is a ceramic matrix composite coated with an environmental barrier coating. At block 120, after contacting the substrate with the aqueous solution, the substrate may be rinsed, for example, with water.

In some examples, at block 110, contacting an aluminosilicate material with the substrate includes treating the substrate via immersion in an aqueous bath that includes at least one of an acid fluoride or a fluoride salt. The substrate may be submerged or immersed in the cleaning solution via the aqueous bath. However, it is contemplated that any suitable approach for contacting the substrate with the cleaning solution may be used.

The substrate may be treated via the aqueous bath for a duration or exposure time of at least about 0.5 hour, about 1 hour, about 2 hours, about 3 hours, about 4 hours, about 5 hours, or about 6 hours.

The aqueous bath may be maintained at a temperature of in the range of about 20 degrees Celsius (e.g., room temperature) to about 100 degrees Celsius, about 50 degrees Celsius to about 100 degrees Celsius, or about 70 degrees Celsius to about 100 degrees Celsius. It is contemplated that, in some approaches, the substrate may be contacted with the cleaning solution for a shorter duration of time when the cleaning solution is at a higher temperature.

By some approaches, the aqueous bath is agitated. Any suitable agitation method can be used. Suitable agitation methods include mixing, stirring, circulation, ultrasonication, etc. Agitation may help to speed up the rate of removal of the adhered particulate matter from the substrate.

In some approaches, at block 130, after contacting the substrate with the cleaning solution, the substrate may also be cleaned via mechanical abrasion. For example, the substrate may be contacted with the cleaning solution for a shorter period of time to partially remove or weaken any adhered particulate matter deposited thereon. Any remaining adhered particulate matter can then be removed via mechanical abrasion. Any suitable method of mechanical abrasion may be used. Suitable methods of mechanical abrasion include but are not limited to grit blasting, ice blasting, or water jets. Contacting the substrate with the cleaning solution for a shorter duration and following by mechanical abrasion may shorten the overall cleaning time. If submersion in the cleaning solution is shown to damage the underlying substrate at an extended exposure time, the exposure time may be shortened, and the cleaning solution may be used in combination with mechanical abrasion.

It is contemplated that cleaning a substrate made of a ceramic matrix composite and/or environmental barrier coating using the methods and compositions described herein may remove adhered particulate matter such as CMAS from the substrate without damaging or interfering with the mechanical integrity of the underlying substrate. For example, the methods and compositions may selectively remove CMAS from a substrate, such as an environmental barrier coating or a CMC, without removing a detrimental amount of the substrate. In some examples, the cleaning solutions described herein may remove about 5 wt.% or less, about 3 wt.% or less, about 2 wt.% or less, about 1.5 wt.% or less, about 1.25 wt.% or less, and, in some aspects, may remove about 1 wt. % or less of the underlying substrate.

The methods and compositions described herein may also remove at least a portion of the adhered particulate matter from a substrate such as an environmental barrier coating and/or a ceramic matrix composite without changing the microstructure of the substrate.

In some examples, the methods and compositions described herein may also remove at least a portion of the adhered particulate matter from a substrate such as an environmental barrier coating and/or a ceramic matrix composite without changing the microstructure of an upper 15 µm, 10 µm, or 5 µm of the substrate. A change to microstructure of the substrate may be determined or indicated, for example, by visual observation of the substrate via scanning electron microscopy or optical microscopy. One example of a change in microstructure includes infiltration of ions, such as fluoride ions, into the substrate. Another example of a change in microstructure includes a change (e.g., an increase) in a thermally grown oxide (TGO) layer of an environmental barrier coating. By some approaches, the method and compositions described herein may remove at least a portion of adhered particulate matter from a substrate including an environmental barrier coating without changing a TGO layer of the environmental barrier coating.

In yet other examples, a change to microstructure of the substrate may be determined or indicated by analysis of the substrate via quantitative microscopy. For example, a quantitative microscopy image of the substrate may be obtained via optical microscope or an electron microscope or before and after exposure to a cleaning solution. Quantitative microscopy enables analysis of components of the substrate, such as damage to fibers of a CMC or change in silicon content. In some approaches, a change in microstructure is reflected by a statistically significant change (e.g., a change that falls outside the standard of deviation/margin of error) in one or more quantitative microscopy parameters associated with the CMC substrate. The quantitative microscopy parameters can include a fiber damage metric such as a damaged fiber fraction.

The methods described herein may also remove adhered particulate matter from an environmental barrier coating without changing or reducing the functionality of the coating. That is, by some approaches, contacting a substrate, such as an EBC, with the cleaning solutions described herein does not change or reduce the functionality of the EBC. In some examples, functionality of the coating may be determined based on changes in the microstructure of an EBC oxidation barrier. For example, it may be determined that there has been no detrimental effect to the functionality of the coating where there is no infiltration of foreign materials, such as ions present in the cleaning solution, into an EBC oxidation barrier.

To further illustrate the present disclosure, examples are given herein. It is to be understood that these examples are provided for illustrative purposes and are not to be construed as limiting the scope of the present disclosure.

### Examples

### Example 1

A coupon, Coupon A, was cleaned using a cleaning solution comprising a fluoride salt, specifically ammonium bifluoride (NH₄HF₂).

Coupon A was made from a ceramic matrix composite with an environmental barrier coating disposed thereon. Coupon A was a coupon taken from an engine-run component and, accordingly, included the base substrate of the ceramic matrix composite and environmental barrier coating with other deposits accumulated from engine run time. A known starting weight of CMAS was deposited onto Coupon A.

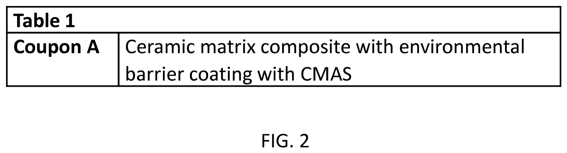

The composition of the coupon cleaned in Example 1 is summarized in Table 1 (shown in FIG. 2).

A cleaning solution comprising a 5 wt.% aqueous solution of ammonium bifluoride (NH₄HF₂) was used to clean Coupon A. Thus, the cleaning solution included about 0.92 M of ammonium bifluoride, where M is molarity in moles per liter (mol/L). Coupon A was submerged in a bath of the cleaning solution, with mixing. The temperature of the cleaning solution was maintained at a temperature of 80 degrees Celsius for the duration of the cleaning experiment.

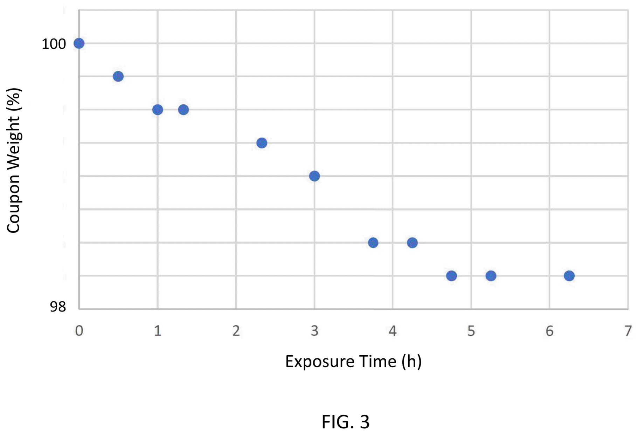

FIG. 3 summarizes the results of the cleaning experiment of Example 1. FIG. 3 shows coupon weight, as a percentage of total weight, as a function of exposure time in hours.

Coupon A lost approximately 1.4% of its initial weight after 6.25 hours of contact with the ammonium bifluoride cleaning solution. Further, after 6.25 hours, all of the CMAS was removed from Coupon A. In total, approximately 0.98% of other material was removed over the duration of exposure to the cleaning solution. Because Coupon A was an engine run component, other material could account for the substrate (i.e., the ceramic matrix composite and environmental barrier coating) along with other deposits that accumulated on the component during the engine run time.

After an exposure time of 2 hours, the CMAS was removable through light mechanical abrasion.

After about 5.25 hours of contact with the ammonium bifluoride cleaning solution, all of the CMAS was removed from the surface of Coupon A. There was little indication of loss of the substrate of Coupon A (i.e., the ceramic matrix composite with environmental barrier coating) over the course of 6.25 hours of exposure to the ammonium bifluoride cleaning solution.

At an exposure time of 0 hours (e.g., before Coupon A was exposed to the cleaning solution), a CMAS deposit could be observed before Coupon A. By contrast, the CMAS deposit was removed from Coupon A after an exposure time of 5.25 hours. Further, comparing Coupon A at an exposure time of 0 hours to Coupon A at an exposure time of 6.25 hours illustrates that there was no visual loss of material from Coupon A after 6.25 hours of exposure to the cleaning solution.

After an exposure time of 22 hours to the cleaning solution all CMAS had been removed, from visual inspection of an SEM image of Coupon A. Also, comparing the microstructure of a coupon before CMAS was deposited thereon and before exposure to the cleaning solution to Coupon A after 22 hours of exposure time, there was no observable change in microstructure due to exposure to the cleaning solution.

### Example 2

Two coupons, Coupon B and Coupon C, were cleaned using a cleaning solution comprising a fluoride salt, ammonium bifluoride (NH₄HF₂).

Coupon B was made from a ceramic matrix composite with an environmental barrier coating disposed thereon. Coupon B was the same as Coupon A but did not include any CMAS deposited thereon.

Coupon C was made from a ceramic matrix composite with CMAS disposed thereon. A known starting weight of CMAS was deposited onto Coupon C. In particular, the CMAS was melted on Coupon C.

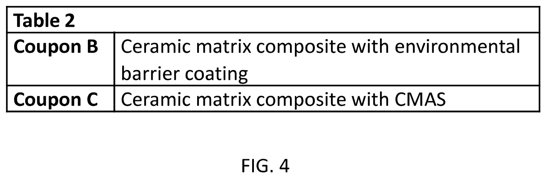

The compositions of the coupons cleaned in Example 2 are summarized in Table 2 (shown in FIG. 4).

A cleaning solution comprising a 10 wt.% aqueous solution of ammonium bifluoride was used to clean Coupon B and Coupon C. Thus, the cleaning solution included about 1.93 M of ammonium bifluoride, where M is molarity in moles per liter (mol/L). Coupon B and Coupon C were submerged in a bath of the cleaning solution, with mixing. The temperature of the cleaning solution was maintained at a temperature of 80 degrees Celsius for the duration of the cleaning experiment. The bath was ultrasonicated for 5 minutes each hour.

Over the course of the cleaning experiment, approximately 1.0 % of the weight of Coupon B was removed via contact with the ammonium bifluoride cleaning solution.

After 3 hours of contact with the ammonium bifluoride cleaning solution, the environmental barrier coating on Coupon B could be chipped off the edges of the coupon via mechanical abrasion. Overall, there was little indication of loss of the substrate of Coupon B (i.e., ceramic matrix composite with environmental barrier coating) over the course of 22 hours of exposure to the ammonium bifluoride cleaning solution.

After 2 hours of contact with the ammonium bifluoride cleaning solution, all of the CMAS was removed from Coupon C.

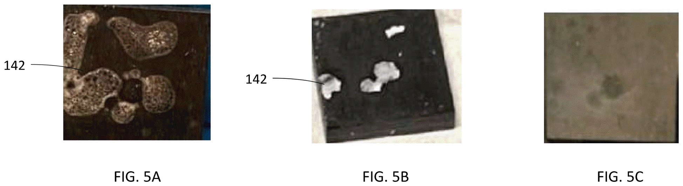

FIGS. 5A, 5B, and 5C show images of Coupon C at different exposure times throughout the cleaning process of Example 2. FIG. 5A is an image of Coupon C at an exposure time of 0 hours. FIG. 5B is an image of Coupon C at an exposure time of 1 hour. FIG. 5C is an image of Coupon C at an exposure time of 2 hours. FIG. 5A shows CMAS 142 present on Coupon C. As shown in FIG. 5B, after 1 hour of exposure, the CMAS 142 was partially removed from Coupon C. As shown in FIG. 5C, after 2 hours Coupon C was completely cleaned and all CMAS was visibly removed.

### Example 3

Two coupons, Coupon D and Coupon E, were cleaned using a cleaning solution comprising an acid fluoride, specifically fluorosilicic acid (H₂SiF₆).

Coupon D was made from a ceramic matrix composite with an environmental barrier coating disposed thereon. Coupon D was a coupon taken from an engine-run component and, accordingly, included the base substrate of the ceramic matrix composite and environmental barrier coating with other deposits accumulated from engine run time.

Coupon E was made from a ceramic matrix composite with CMAS disposed thereon. A known starting weight of CMAS was deposited onto Coupon E. In particular, the CMAS was melted on Coupon E.

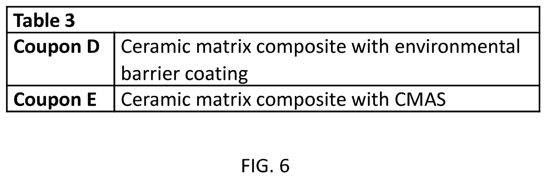

The compositions of the coupons cleaned in Example 3 are summarized in Table 3 (shown in FIG. 6).

A cleaning solution comprising a 23 wt.% aqueous solution of fluorosilicic acid (H₂SiF₆) was used to clean Coupon D and Coupon E. Thus, the cleaning solution included about 1.95 M of fluorosilicic acid, where M is molarity in moles per liter (mol/L). Coupon D and Coupon E were submerged in a bath of the fluorosilicic acid cleaning solution, with mixing. The temperature of the fluorosilicic acid cleaning solution was maintained at a temperature of 80 degrees Celsius for the duration of the cleaning experiment.

During the experiment, Coupon D was cleaned and brightened but there was no visual loss of material. There was a large initial weight loss of Coupon D, within the first half hour of contact with the fluorosilicic acid cleaning solution. Because Coupon D was from an engine run component, this represented an initial cleaning of the substrate. After the initial weight loss, a consistent, slow weight loss was observed for the next 7.5 hours of contact with the fluorosilicic acid cleaning solution. The mechanical integrity of Coupon D was maintained upon exposure to the fluorosilicic acid cleaning solution.

The initial thickness of Coupon D and the thickness of Coupon D after 3.5 hours of contact with the fluorosilicic acid cleaning solution were measured. After 3.5 hours of contact with the ammonium fluorosilicic acid solution, Coupon D lost approximately 0.0001 inch of material in thickness, which reflects the removal of deposits present on the engine run component.

During the experiment, all of the CMAS was removed from Coupon E after about 0.5 hour to 1 hour of contact with the fluorosilicic acid cleaning solution. There was little indication of loss of the ceramic matrix composite substrate of Coupon E over the course of 8 hours of exposure to the fluorosilicic acid cleaning solution.

A visual comparison of Coupon D after 0 hours of exposure time to Coupon D after 8 hours of exposure time illustrates that the ECB of Coupon D was cleaned and brightened with exposure to the cleaning solution but there was no visual loss of material from the EBC after 8 hours of exposure to the cleaning solution.

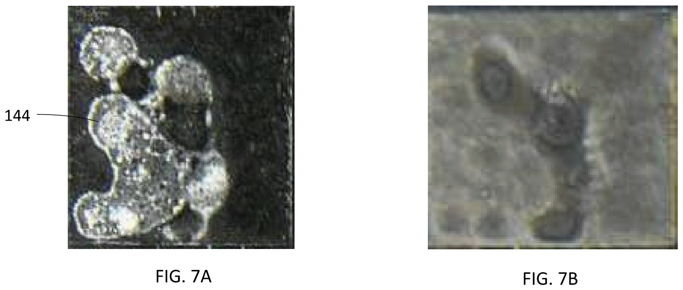

FIGS. 7A and 7B show images, taken via a camera, of Coupon E at different exposure times throughout the cleaning process of Example 3. FIG. 7A is an image of Coupon E at an exposure time of 0 hours. FIG. 7B is an image of Coupon E at an exposure time of 0.5 hours. FIG. 7A shows CMAS 144 present on Coupon E. As shown in FIG. 7B, after 0.5 hours of exposure, Coupon E was completely cleaned and all CMAS was visibly removed.

### Example 4

A ceramic matrix composite component having an environmental barrier coating is contacted with a cleaning solution comprising an aqueous solution of 20 wt. % lithium fluoride in after for a duration of 2 hours. Thus, the cleaning solution included about 9.25 M of lithium fluoride, where M is molarity in moles per liter (mol/L). The cleaning solution is maintained at a temperature of 85 degrees Celsius. After 2 hours, the component is rinsed with deionized water.

### Example 5

A ceramic matrix composite component having an environmental barrier coating is contacted with a cleaning solution comprising an aqueous solution of 15 wt. % fluorozirconic acid (H₂ZrF₆) in water for a duration of 0.5 hours. Thus, the cleaning solution included about 0.84 M of fluorozirconic acid, where M is molarity in moles per liter (mol/L). The cleaning solution is maintained at a temperature of 100 degrees Celsius. After 2 hours, the component is rinsed with deionized water.

### Example 6

A ceramic matrix composite component having an environmental barrier coating is contacted with a cleaning solution comprising an aqueous solution of 2.62 M sodium fluoride (NaF) and 0.001M hydrochloric acid (HCl) in water, where M is molarity in moles per liter (mol/L), for a duration of 8 hours. The cleaning solution was maintained at a temperature of 20 degrees Celsius. After 8 hours, the component is rinsed with deionized water.

### Example 7

A ceramic matrix composite component is contacted with a cleaning solution comprising an aqueous solution of 5.61 M fluoroacetic acid (CH₂FCO₂H) and 0.001 M hydrochloric acid (HCl) in water, where M is molarity in moles per liter (mol/L), for a duration of 2.5 hours. The cleaning solution is maintained at a temperature of 75 degrees Celsius. After 2.5 hours, the component is rinsed with deionized water.

### Example 8

A ceramic matrix composite component is contacted with a cleaning solution comprising an aqueous solution of 1.05 rubidium fluoride (RbF) in water for a duration of 12 hours. The cleaning solution is maintained at a temperature of 50 degrees Celsius. After 12 hours, the component is rinsed with deionized water.

### Example 9

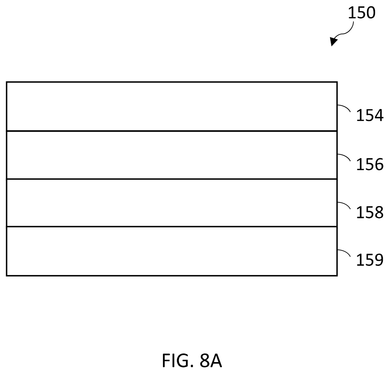

A coupon 150 made of a CMC material and coated with an EBC was exposed to a cleaning solution comprising a 23 wt.% aqueous solution (1.95 M, where M is molarity in moles per liter (mol/L)) of fluorosilicic acid H₂SiF₆ for an exposure time of 60 minutes. A schematic image of the coupon 150 is depicted in FIG. 8A. The coupon 150 did not include melted CMAS. The coupon 150 included an EBC 154, a thermally grown oxide (TGO) 156, a bond coat 158, and a CMC material 159. The EBC 154 can be a single or plurality of layers of EBC.

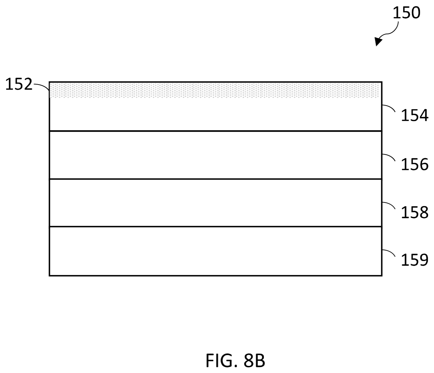

The coupon 150 was examined via a scanning electron microscope (SEM) after exposure to the cleaning solution. In the SEM image, fluoride ion (F-) infiltration was observed at the upper portion of the EBC 154, as indicated by a darker crust on the top of the coupon 150 when examined via visual observation. The fluoride ion infiltration was confirmed via energy dispersive spectroscopy (EDS) signal. The change in coating microstructure, due to fluoride ion infiltration, however, did not extend through the EBC 154, the TGO 156, or the bond coat 158. FIG. 8B shows a schematic image of the coupon 150 after exposure to the cleaning solution. As shown in FIG. 8B, the coupon 150 had an infiltrated region 152 where fluoride ion infiltration was observed. Only a portion of the EBC 154 was infiltrated, leaving a remaining portion of the EBC 154 unmodified.

Importantly, the oxidation barrier remained intact which is important to the functionality of the EBC after exposure to the cleaning solution. In the SEM image, there was no morphology change in the remaining lower EBC 154 below the infiltrated region 152. Further, no growth of the TGO layer 156 was observed in the SEM image. Thus, any effect of exposure to the_H₂SiF₆ cleaning solution on the microstructure of coupon 150 was limited to the upper 5-10 µm of the coupon 150.

### Example 10

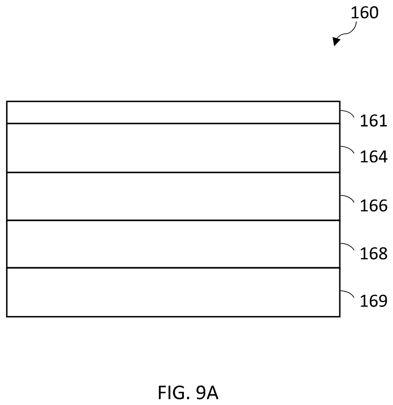

A coupon 160 made of a CMC material and coated with an EBC was exposed to a cleaning solution comprising a 5 wt.% aqueous solution (0.92 M, where M is molarity in moles per liter (mol/L)) of ammonium bifluoride NH₄HF₂ for an exposure time of 400 minutes. A schematic image of the coupon 160 is depicted in FIG. 9A. The coupon 160 included melted CMAS disposed on the top surface of the coupon 160. A schematic image of the coupon 160 is depicted in FIG. 9A. The coupon 160 included a CMAS deposit 161, an EBC 164, a thermally grown oxide (TGO) 166, a bond coat 168, and a CMC material 169. The EBC 164 can be a single or plurality of layers of EBC.

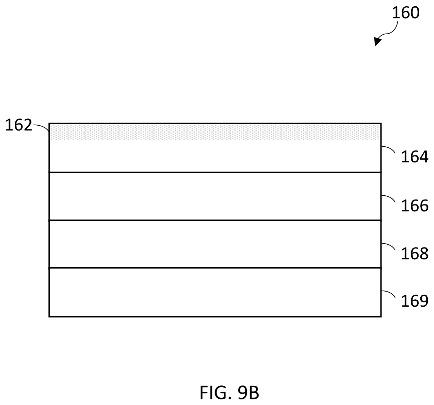

FIG. 9B shows a schematic image of the coupon 160 after exposure to the cleaning solution. As shown in FIG. 9B, the coupon 160 had an infiltrated region 162 where fluoride ion infiltration was observed. Only a portion of the EBC 164 was infiltrated, leaving a remaining portion of the EBC 164 unmodified. In addition, the CMAS deposit 161 was removed during exposure to the cleaning solution.

The coupon 160 was examined via a scanning electron microscope (SEM) after exposure to the cleaning solution. In the SEM image, there was some degradation in the microstructure of the EBC 164. The degradation, however, was likely caused during the CMAS attack and not during the cleaning solution exposure. Thus, the NH₄HF₂ in the cleaning solution likely had no additional effect on the EBC 164.

### Example 11

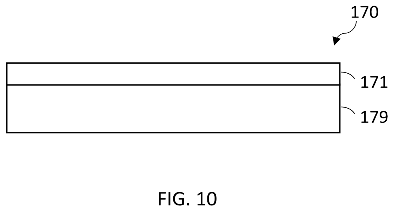

A coupon 170 made of a CMC material and coated with an EBC was exposed to a cleaning solution comprising a 5 wt.% aqueous solution (0.92 M, where M is molarity in moles per liter (mol/L)) of ammonium bifluoride NH₄HF₂ for an exposure time of 400 minutes. A schematic image of the coupon 170 is depicted in FIG. 10. The coupon 170 included melted CMAS. The coupon 170 included a CMAS deposit 171 and a CMC material 179.

The coupon 170 was examined via a scanning electron microscope (SEM) after exposure to the cleaning solution. In the SEM image, the CMAS was removed and there was no observable change to the CMC microstructure.

### Example 12

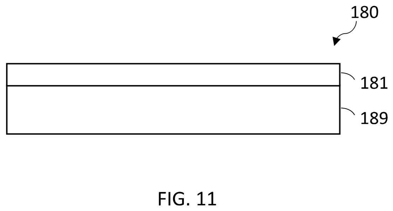

A coupon 180 made of a CMC material and coated with an EBC was exposed to a cleaning solution comprising a 23 wt.% aqueous solution (1.95 M, where M is molarity in moles per liter (mol/L)) of fluorosilicic acid H₂SiF₆ for an exposure time of 60 minutes. A schematic image of the coupon 180 is depicted in FIG. 11. The coupon 180 included melted CMAS. The coupon 180 included a CMAS deposit 181 and a CMC material 189.

The coupon 180 was examined via a scanning electron microscope (SEM) after exposure to the cleaning solution. In the SEM image, the CMAS was removed and there was no observable change to the CMC microstructure.

### Example 13

Samples were analyzed using quantitative microscopy. The quantitative microscopy analysis was performed to determine an impact on the microstructure of a CMC substrate before and after exposure to different cleaning solutions. The quantitative microscopy results are illustrated in FIGS. 16A and 16B.

Sample 1 was a bare CMC substrate that was unexposed to any cleaning solution. Sample 1 is labeled to as "Unexposed" in FIG. 16A. Sample 2 was a bare CMC substrate that had been exposed to a cleaning solution comprising a 5 wt.% aqueous solution (0.92 M, where M is molarity in moles per liter (mol/L)) of ammonium bifluoride NH₄HF₂ for 400 minutes. Sample 2 is labeled as "NH4HF2" in FIG. 16A. Sample 3 was a bare CMC substrate that had been exposed to a cleaning solution comprising a 23 wt.% aqueous solution (1.95 M, where M is molarity in moles per liter (mol/L)) of fluorosilicic acid H₂SiF₆ for 60 minutes. Sample 3 is labeled "H2SiF6" in FIG. 16A.

Sample 4 was a CMC substrate from an engine run outer liner of gas turbine engine that included deposited CMAS and was unexposed to any cleaning solution. Sample 4 is labeled as "Unexposed" in FIG. 16B. Sample 5 was a CMC substrate from an engine run outer liner of gas turbine engine that included deposited CMAS that had been exposed to a cleaning solution comprising a 5 wt.% aqueous solution (0.92 M, where M is molarity in moles per liter (mol/L)) of ammonium bifluoride NH₄HF₂ for 400 minutes. Sample 5 is labeled as "NH4HF2" in FIG. 16B. Sample 6 was a CMC substrate from an engine run outer liner of gas turbine engine that included deposited CMAS that had been exposed to a cleaning solution comprising a 23 wt.% aqueous solution (1.95 M, where M is molarity in moles per liter (mol/L)) of fluorosilicic acid H₂SiF₆ for 60 minutes. Sample 6 is labeled "H2SiF6" in FIG. 16B.

FIGS. 16A and 16B are charts of quantitative microscopy data showing damaged fiber fraction.

FIG. 16A shows damaged fiber fraction for bare CMC substrates (Sample 1, Sample 2, Sample 3) before and after exposure to cleaning solutions. As shown in FIG. 16A, there is not a statistically significant difference in damaged fiber fraction for all exposed samples compared to unexposed samples, which indicates that the CMC substrate was not damaged. Additionally, the exposed samples (Sample 2 and Sample 3) had damaged fiber fractions that were on average less than that of the unexposed sample (Sample 1), further indicating that exposure to the cleaning solutions did not affect the CMC.

FIG. 16B shows damaged fiber fraction for CMC substrates with CMAS from an engine run outer liner (Sample 4, Sample 5, Sample 6) before and after exposure to the cleaning solutions. For both exposed samples (Sample 5 and Sample 6), damaged fiber fraction was not statistically significantly different compared to unexposed samples. The unexposed sample (Sample 1) was higher and outside the acceptable range, which is attributed to an erroneous result.

The values from the graphs in FIGS. 16A and 16B were obtained by averaging and normalizing ply data for each sample CMC substrate.

### Example 14

An EBC-coated CMC coupon was exposed to a H₂SiF₆ cleaning solution to assess the impact of a H₂SiF₆ on the EBC and underlying CMC substrate. The coupon was assessed via SEM before exposure to obtain a baseline SEM image and after exposure to obtain an exposed image.

Fluoride ion (F-) infiltration was observed in an upper portion of the EBC. This fluoride ion infiltration was confirmed via EDS signal. In the exposed image, changes in coating chemistry did not extend through entirety of the EBC, the TGO layer, or the bond coat leaving the oxidation barrier intact. An intact oxidation barrier is key to coating functionality. Thus, the exposed image indicates that the EBC coating remains intact after exposure to the H₂SiF₆ cleaning solution.

No morphology changes were observed in lower portions of the EBC comparing the baseline image to the exposed image. In addition, no TGO growth was observed comparing the baseline image to the exposed image. Any effect on the microstructure of the EBC was observed in the upper 5-10 µm of the EBC.

### Example 15

An EBC-coated CMC coupon with CMAS melted on the top of the EBC was exposed to a NH₄HF₂ cleaning solution. The coupon was assessed via SEM before exposure to obtain a baseline SEM image and after exposure to obtain an exposed image. Some degradation of the EBC was observed in the exposed image. Such degradation was likely caused during CMAS attack and not due to NH₄HF₂ exposure. NH₄HF₂ exposure likely had no additional effect. The same degradation is seen when comparing a coupon only exposed to CMAS to one with CMAS plus chemical exposure.

### Example 16

A first coupon comprising CMC with CMAS melted on top was exposed to a NH₄HF₂ cleaning solution. The first coupon was assessed via SEM before exposure to obtain an exposed image. A second coupon comprising CMC without melted CMAS was also assessed via SEM to obtain a baseline image. The second coupon was not exposed to the NH₄HF₂ cleaning solution prior to imaging.

There was no observable change to the CMC microstructure comparing the baseline image to the exposed image. This indicated that exposure to the NH₄HF₂ cleaning solution likely did not impact the microstructure of the CMC coupon.

### Example 17

A first coupon comprising CMC with CMAS melted on top was exposed to a H₂SiF₆ cleaning solution. The first coupon was assessed via SEM before exposure to obtain an exposed image. A second coupon comprising CMC without melted CMAS was also assessed via SEM to obtain a baseline image. The second coupon was not exposed to the H₂SiF₆ cleaning solution prior to imaging.

There was no observable change to the CMC microstructure comparing the baseline image to the exposed image. This indicated that exposure to the H₂SiF₆ cleaning solution likely did not impact the microstructure of the CMC coupon.

### Example 18

An EBC-coated CMC coupon with CMAS melted on top was exposed to steam for an engine representative duration and temperature profile. After steam testing, the EBC-coated CMC coupon with melted CMAS was imaged using SEM to produce a baseline image. The EBC-coated CMC coupon with melted CMAS was exposed to a NH₄HF₂ cleaning solution. After exposure, EBC-coated CMC coupon with melted CMAS was exposed to steam for an engine representative duration and temperature profile. After exposure and steam testing, the EBC-coated CMC coupon with melted CMAS was imaged using SEM to produce an exposed image.

Comparing the baseline image to the exposed image revealed that the EBC survived the steam test with no spallation or chipping. Any noted damage to the EBC, for example bond coat or TGO degradation and thickening, was consistent with CMAS attack and steam exposure. These results indicated that exposure to the NH₄HF₂ cleaning solution did not degrade the functionality of the EBC as an environmental barrier under field-replicable conditions.

### Example 19

An EBC-coated CMC coupon with CMAS melted on top was exposed to steam for an engine representative duration and temperature profile. After steam testing, the EBC-coated CMC coupon with melted CMAS was imaged using SEM to produce a baseline image. The EBC-coated CMC coupon with melted CMAS was exposed to a H₂SiF₆ cleaning solution. After exposure, the EBC-coated CMC coupon with melted CMAS was exposed to steam for an engine representative duration and temperature profile. After exposure and steam testing, the EBC-coated CMC coupon with melted CMAS was imaged using SEM to produce an exposed image.

Comparing the baseline image to the exposed image revealed that the EBC survived the steam test with no spallation or chipping. Any noted damage to the EBC, for example bond coat or TGO degradation and thickening, was consistent with CMAS attack and steam exposure. These results indicated that exposure to the H₂SiF₆ cleaning solution did not degrade the functionality of the EBC as an environmental barrier under field-replicable conditions.

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

All percentages and ratios are calculated by weight unless otherwise indicated. All percentages and ratios are calculated based on the total weight of the compound or composition unless otherwise indicated.

Reference throughout the specification to "an example," "one example," "another example," "some examples," "other examples," and so forth, means that a particular element (e.g., feature, structure, and/or characteristic) described in connection with the example is included in at least one example described herein, and may or may not be present in other examples. In addition, it is to be understood that the described elements for any example may be combined in any suitable manner in the various examples unless the context clearly dictates otherwise.

Further aspects of the disclosure are provided by the subject matter of the following clauses:
A method of removing adhered particulate matter from a substrate, the method comprising contacting the substrate with a cleaning solution comprising an aqueous solution of at least one of an acid fluoride or a fluoride salt, the substrate comprising at least one of a ceramic matrix composite or an environmental barrier coating.

The method of any preceding clause, wherein the acid fluoride includes at least one of fluorosilicic acid (H₂SiF₆), fluorozirconic acid (H₂ZrF₆), fluorosulfonic acid (HSO₃F), or fluoroacetic acid (CH₂FCO₂H).

The method of any preceding clause, wherein the acid fluoride includes at least one of fluorozirconic acid (H₂ZrF₆) or fluoroacetic acid (CH₂FCO₂H).

The method of any preceding clause, wherein the acid fluoride is present in the cleaning solution in an amount within the range of about 0.05 M to about 5.0 M, where M is molarity in moles per liter (mol/L).

The method of any preceding clause, wherein the fluoride salt is a salt of fluoride and a Group IA element or a Group IIA element.

The method of any preceding clause, the fluoride salt is present in the cleaning solution in an amount within the range of about 0.01 M to about 10.0 M, where M is molarity in moles per liter (mol/L).

The method of any preceding clause, wherein the fluoride salt has a solubility in water of at least about 1 g/L at room temperature.

The method of any preceding clause, wherein the cleaning solution is maintained at a temperature in the range of about 20 degrees Celsius to about 100 degrees Celsius.

The method of any preceding clause, wherein contacting the substrate with the cleaning solution includes contacting the substrate with the cleaning solution for an exposure time of at least about 0.5 hours.

The method of any preceding clause, wherein the adhered particulate matter is calcium magnesium aluminosilicate (CMAS).

The method of any preceding clause, wherein contacting the substrate with the cleaning solution removes 5 wt.% or less of the substrate.

The method of any preceding clause, wherein the substrate is an environmental barrier coating, and wherein contacting the substrate with the cleaning solution does not change a functionality of the environmental barrier coating.

The method of any preceding clause, wherein the cleaning solution removes at least a portion of the adhered particulate matter from the substrate without changing a microstructure of an upper 5 µm of the substrate.

The method of any preceding clause, the substrate is an environmental barrier coating, and wherein contacting the substrate does not change a thermally grown oxide layer of the environmental barrier coating.

The method of any preceding clause, wherein the cleaning solution further includes a mineral acid.

A method of removing adhered particulate matter from a substrate, the method comprising treating the substrate via immersion in an aqueous bath that includes at least one of an acid fluoride or a fluoride salt, the substrate comprising a ceramic matrix composite or a ceramic matrix composite with an environmental barrier coating disposed thereon.

The method of any preceding clause, wherein the aqueous bath is agitated.

The method of any preceding clause, wherein the aqueous bath is maintained at a temperature in the range of about 20 degrees Celsius to about 100 degrees Celsius.

The method of any preceding clause, wherein treating the substrate via the aqueous bath includes treating the substrate via the aqueous bath for an exposure time of at least about 0.5 hours.

The method of any preceding clause, further comprising cleaning the substrate via mechanical abrasion

## Claims

1. A method of removing adhered particulate matter from a substrate, the method comprising contacting the substrate with a cleaning solution comprising an aqueous solution of at least one of an acid fluoride or a fluoride salt, the substrate comprising at least one of a ceramic matrix composite or an environmental barrier coating.

2. The method of claim 1, wherein the acid fluoride includes at least one of fluorosilicic acid (H₂SiF₆), fluorozirconic acid (H₂ZrF₆), fluorosulfonic acid (HSO₃F), or fluoroacetic acid (CH₂FCO₂H).

3. The method of claim 1 or 2, wherein the acid fluoride includes at least one of fluorozirconic acid (H₂ZrF₆) or fluoroacetic acid (CH₂FCO₂H).

4. The method of any of claims 1 to 3, wherein the acid fluoride is present in the cleaning solution in an amount within the range of about 0.05 M to about 5.0 M, where M is molarity in moles per liter (mol/L).

5. The method of any of claims 1 to 4, wherein the fluoride salt is a salt of fluoride and a Group IA element or a Group IIA element.

6. The method of claim any of claims 1 to 5, the fluoride salt is present in the cleaning solution in an amount within the range of about 0.01 M to about 10.0 M, where M is molarity in moles per liter (mol/L).

7. The method of claim any of claims 1 to 6, wherein the fluoride salt has a solubility in water of at least about 1 g/L at room temperature.

8. The method of any of claims 1 to 7, wherein the cleaning solution is maintained at a temperature in the range of about 20 degrees Celsius to about 100 degrees Celsius.

9. The method of any of claims 1 to 8. wherein contacting the substrate with the cleaning solution includes contacting the substrate with the cleaning solution for an exposure time of at least about 0.5 hours.

10. The method of any of claims 1 to 9, wherein the adhered particulate matter is calcium magnesium aluminosilicate (CMAS (144) (142)).

11. The method of any of claims 1 to 10, wherein contacting the substrate with the cleaning solution removes 5 wt.% or less of the substrate.

12. The method of any of claims 1 to 11, wherein the substrate is an environmental barrier coating, and wherein contacting the substrate with the cleaning solution does not change a functionality of the environmental barrier coating.

13. The method of any of claims 1 to 12, wherein the cleaning solution removes at least a portion of the adhered particulate matter from the substrate without changing a microstructure of an upper 5 µm of the substrate.

14. The method of any of claims 1 to 13, the substrate is an environmental barrier coating, and wherein contacting the substrate does not change a thermally grown oxide layer of the environmental barrier coating.

15. The method of any of claims 1 to 14, wherein the cleaning solution further includes a mineral acid.
